# EUROPEAN PATENT APPLICATION

(11) **EP 4 752 023 A1**
(43) Date of publication of application: **03.06.2026**
(21) Application number: 25216882.8
(22) Date of filing: 19.11.2025
(51) Int. Cl.: B60W 50/029, B60W 60/00

(54) **METHOD, APPARATUS, DEVICE AND COMPUTER READABLE STORAGE MEDIUM FOR AUTONOMOUS VEHICLE**

(30) Priority: 29.11.2024 CN 202411747438
(71) Applicant: Beijing Voyager Technology Co., Ltd., 100094 Beijing (CN)
(72) Inventor: XU, Jiang, Beijing, 100094 (CN); ZHANG, Yanbo, Beijing, 100094 (CN); XU, Yang, Beijing, 100094 (CN); XU, Zhe, Beijing, 100094 (CN); GUO, Fengrui, Beijing, 100094 (CN)
(74) Representative: Marks & Clerk LLP

(57) **Abstract**

According to an embodiment of the present disclosure, a method, apparatus, device and computer readable storage medium for an autonomous vehicle are provided. The method includes: determining, in response to detecting an anomaly associated with the autonomous vehicle, a target mode of the minimal risk manoeuvre MRM to enter a minimum risk condition MRC. The policy information corresponding to the target mode of the MRM is obtained, and the policy information at least indicates a maximum impact degree on a traffic environment allowed by the target mode. A parking process of the autonomous vehicle is controlled based on a current traffic environment of the autonomous vehicle and the policy information. Therefore, the embodiment of the present disclosure can reduce an impact degree of parking on the traffic and ensure that the vehicle can quickly and safely enter the minimum risk condition MRC in an anomaly state.

## Description

### FIELD

Example embodiments of the present disclosure generally relate to a field of computers, and in particular, to method, apparatus, device, and computer readable storage medium for an autonomous vehicle.

### BACKGROUND

Automatic driving is a technique that perceives surrounding environment of a vehicle, plans a movement trajectory of the vehicle, and controls the vehicle to reach a specified destination by using a computer to replace or to assist a human driver.

During a driving process of the autonomous vehicle, some fault conditions may occur. In this case, how to control the safe parking of an autonomous vehicle is an important part of improving driving safety and reliability.

### SUMMARY

In a first aspect of the present disclosure, a method for an autonomous vehicle is provided. The method includes: determining, in response to detecting an anomaly associated with the autonomous vehicle, a target mode of the minimal risk manoeuvre MRM to enter a minimum risk condition MRC. Policy information corresponding to the target mode of the MRM is obtained, and the policy information at least indicates a maximum impact degree on a traffic environment allowed by the target mode. A parking process of an autonomous vehicle is controlled based on a current traffic environment of the autonomous vehicle and policy information.

In a second aspect of the present disclosure, an apparatus for an autonomous vehicle is provided. The apparatus includes: a target mode determination module configured to determine, in response to detecting an anomaly associated with the autonomous vehicle, a target mode of a minimal risk manoeuvre MRM to enter a minimum risk condition MRC. A policy information obtaining module is configured to obtain policy information corresponding to a target mode of the MRM, and the policy information at least indicates a maximum impact degree on a traffic environment allowed by the target mode. The parking control module is configured to control a parking process of the autonomous vehicle based on a current traffic environment of the autonomous vehicle and the policy information.

In a third aspect of the present disclosure, an electronic device is provided. The device includes at least one processing unit; and at least one memory, the at least one memory being coupled to the at least one processing unit and storing instructions for execution by the at least one processing unit. The instructions, when executed by the at least one processing unit, cause the device to perform the method of the first aspect or the second aspect.

In a fourth aspect of the present disclosure, a computer-readable storage medium is provided. The computer-readable storage medium stores a computer program, and the computer program is executable by a processor to implement the method of the first aspect or the second aspect.

In a fifth aspect of the present disclosure, a computer program product is provided. The computer program product includes computer-executable instructions that, when executed by a processor, implement the method of the first aspect or the second aspect.

It should be understood that the content described in the summary section of the present disclosure is neither intended to limit key features or essential features of the embodiments of the present disclosure, nor is it intended to be used to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent in conjunction with the accompanying drawings and with reference to the following detailed description. In the drawings, the same or similar reference numbers refer to the same or similar elements, where:
FIG. 1 illustrates a schematic diagram of an example environment capable of implementing embodiments of the present disclosure;
FIG. 2 illustrates a flowchart of a method for an autonomous vehicle according to some embodiments of the present disclosure;
FIG. 3 illustrates a comparison diagram of characteristics of four MRM modes according to some embodiments of the present disclosure;
FIG. 4 illustrates a comparison diagram of parking ranges of four MRM modes according to some embodiments of the present disclosure;
FIG. 5 illustrates a schematic diagram of a right turn dedicated lane according to some embodiments of the present disclosure;
FIG. 6 illustrates a schematic structural block diagram of an apparatus for an autonomous vehicle according to some embodiments of the present disclosure; and
FIG. 7 illustrates a block diagram of a device capable of implementing various embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be interpreted as limited to the embodiments set forth herein, but rather, these embodiments are provided for a more thorough and complete understanding of the present disclosure. It should be understood that the drawings and embodiments of the present disclosure are merely for example purposes and are not intended to limit the protection scope of the present disclosure.

It should be noted that the title of any section/subsection provided herein is not limiting. Various embodiments are described throughout and any type of embodiments may be included in any section/subsection. Furthermore, the embodiments described in any section/subsection may be combined in any manner with any other embodiments described in the same section/subsection and/or different sections/subsections.

In the description of the embodiments of the present disclosure, the terms "comprising" and the like should be understood as openness, that is, "comprising but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

Embodiments of the present disclosure may involve data of a user, obtaining and/or usage of the data, and the like. These aspects all follow corresponding laws and regulations and related provisions. In the embodiments of the present disclosure, all collecting, obtaining, processing, handling, forwarding, usage, etc. of the data are performed on the premise that the user knows and confirms. Accordingly, when implementing the embodiments of the present disclosure, types, usage scopes, usage scenarios, and the like of the data or information that may be involved should be notified to the user and obtain user authorization in an appropriate manner according to the relevant laws and regulations. The specific notification and/or authorization manner may vary according to actual situations and application scenarios, and the scope of the present disclosure is not limited in this respect.

According to solutions in the present specification and the embodiments, for example, when involving personal information processing, processing will be performed on the premise of having a legality basis (for example, obtaining consent of a personal information subject, or being necessary for performing a contract, etc.), and processing will only be conducted within a specified or agreed range. If a user refuses to process personal information other than that necessary for basic functions, it will not affect the user using basic functions.

As used herein, the term "model" may learn a correlation between corresponding inputs and outputs from training data such that corresponding outputs may be generated for a given input after training is complete. Generation of the model may be based on machine learning techniques. Deep learning is a machine learning algorithm that processes inputs and provides corresponding outputs by using a plurality of layers of processing units. Herein, a "model" may also be referred to as a "machine learning model," a "machine learning network," or a "network," which terms are used interchangeably herein.

With the continuous development of autonomous driving technology, safety of vehicles without human intervention becomes a focus of attention. Especially when a vehicle is abnormal (such as a system fault of a vehicle, a sensor malfunction or an insufficient energy), how to quickly and effectively control the vehicle to enter a safe state is crucial. In some related technologies, the problem is usually solved through a simple emergency stop mechanism, but this may cause hidden dangers such as traffic congestion and secondary accidents.

Embodiments of the present disclosure provide a method for an autonomous vehicle, the method may include in response to detecting an anomaly associated with an autonomous vehicle, determining a target mode of a minimal risk manoeuvre MRM to enter a minimum risk condition MRC. The policy information corresponding to the target mode of the MRM is obtained, and the policy information at least indicates a maximum impact degree on a traffic environment allowed by the target mode. A parking process of an autonomous vehicle is controlled based on a current traffic environment of the autonomous vehicle and the policy information.

According to the embodiments of the present disclosure, the target mode of the minimal risk manoeuvre MRM may be dynamically determined when the autonomous vehicle detects the anomaly, the parking process is controlled by obtaining corresponding policy information and in combination with the current traffic environment, and a technical effect of differentiated processing according to an anomaly type and the traffic condition is achieved. According to the method, the impact degree of parking on the traffic is effectively reduced, meanwhile, the vehicle is ensured to enter the minimum risk condition MRC quickly and safely in an anomaly state, and the real-time performance and flexibility of anomaly handling of the autonomous vehicle are improved.

### Example Environment

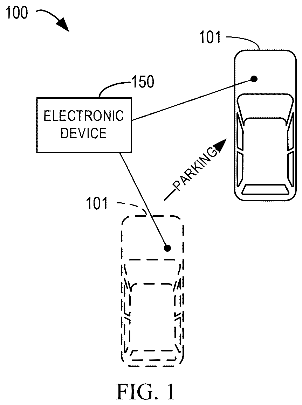

FIG. 1 illustrates a schematic diagram of an example environment 100 capable of implementing embodiments of the present disclosure. An autonomous vehicle 101 may be included in the environment 100. In some embodiments, the autonomous vehicle 101 may be any type of vehicle that may carry people and/or objects and move through a power system such as an engine, the autonomous vehicle including, but not limited to, a car, a truck, a bus, an electric vehicle, a recreational vehicle, and the like. The autonomous vehicle 101 may be an autonomous driving vehicle (also referred to as an autonomous vehicle) that integrates functions such as environmental perception, planning decision, and multi-level assisted driving.

As shown in FIG. 1, an electronic device 150 may be any device having a computing capability, and the electronic device 150 may control a parking process of the autonomous vehicle.

It should be understood that the structure and function of the environment 100 is described for example purposes only and does not imply any limitation to the scope of the present disclosure.

### Controlling autonomous vehicle parking process

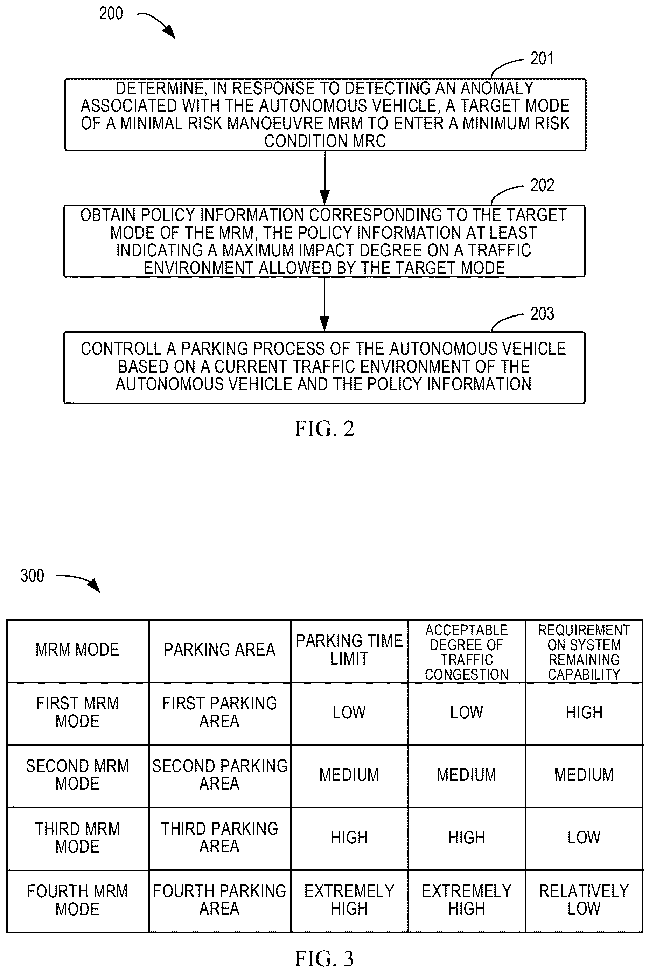

Some example embodiments of the present disclosure will be described below with continued reference to the accompanying drawings. FIG. 2 illustrates a flowchart of a method 200 for an autonomous vehicle according to some embodiments of the present disclosure.

As shown in FIG. 2, at block 201, the electronic device 150 determines, in response to detecting an anomaly associated with the autonomous vehicle 101, a target mode of a minimal risk manoeuvre MRM to enter a minimum risk condition MRC.

The autonomous vehicle 101 may include a vehicle capable of autonomously perceiving an environment, planning a path, and performing driving operations by sensors, control systems, and algorithms without relying on manual driving. The autonomous vehicle 101 may trigger anomalies due to various reasons, such as hardware failures (e.g., sensor failures), software failures (e.g., algorithmic errors), external environmental changes (such as extreme weather or road obstacles) during operation, these anomalies may pose a potential risk on driving safety of the vehicle and surrounding traffic environment.

Different types of anomalies may produce varying degrees of impact on the remaining driving capabilities of the vehicle, e.g., partial anomalies allow the vehicle to move slowly, while some serious anomalies may completely lose driving capabilities. To handle these different scenarios, the autonomous vehicle needs to determine an appropriate target mode of the minimal risk manoeuvre MRM to enter the minimum risk condition MRC. The target mode of the MRM may be divided into four modes according to different impact levels on the traffic environment.

FIG. 3 illustrates a comparison diagram of characteristics 300 of four MRM modes according to some embodiments of the present disclosure. As an example, the four modes may include: a first MRM mode to a fourth MRM mode. Four modes are described below respectively.

The first MRM mode indicates to park in a harbor area, and the maximum impact degree is a first degree. The first MRM mode indicates that the autonomous vehicle 101 is preferentially parked in a harbor area (ZONE _HARBOR), such as a service area of a highway or a dedicated parking spot in a city. The first MRM mode has the lowest congestion degree on traffic, and is usually only applicable to situations in which the vehicle has relatively high remaining system capability, for example, a minor sensor failure or a mild algorithm anomaly, and so on. The autonomous vehicle 101 may be parked for a long time in this mode for inspection or to resume normal operation. Since the number of harbor areas is limited and the distribution of harbor areas is not uniform, this mode has a relatively high requirement on path planning capability and navigation capability of the autonomous vehicle 101, and this mode is the minimal risk manoeuvre mode with the highest priority.

The second MRM mode indicates to pull over, the maximum impact degree is a second degree, and the second degree is higher than the first degree. The second MRM mode indicates the autonomous vehicle 101 to pull over in a roadside area (ZONE _PULLRIGHT), such as an emergency lane or a hard shoulder on the right side of the road. Compared with the first MRM mode, the second MRM mode causes a slightly higher degree of traffic congestion, but it is still within an acceptable range. As an example, the second MRM mode may be applicable to a medium degree of anomaly (such as a decrease in power system performance) of the autonomous vehicle 101, but still retains basic steering and mobility capabilities. This mode has fewer limitations on the parking area and a relatively short parking time limit, and the autonomous vehicle 101 needs to quickly drive into the roadside area to reduce the interference on the traffic flow.

The third MRM mode indicates to stop within a current lane, the maximum impact degree is a third degree, and the third degree is higher than the second degree. The third MRM mode indicates the autonomous vehicle 101 to slow down and stop within the current lane (ZONE_INLANE). As an example, the third MRM mode is applicable to situations where the autonomous vehicle 101 is unable to steer but still can control deceleration, such as when the braking system is partially lost. Since the autonomous vehicle 101 stops within the current lane, this mode has a relatively greater impact on traffic congestion, only a short-time stopping is allowed to wait for further rescue or instructions. This third MRM mode has a relatively lower requirement on the system remaining capability of the autonomous vehicle 101, but requires real-time detection of the traffic environment to avoid secondary risk.

The fourth MRM mode indicates an emergency stop, the maximum impact degree is a fourth degree, and the fourth degree is higher than the third degree. The fourth MRM mode indicates the autonomous vehicle 101 to stop at any allowed area immediately with maximum braking capacity (ZONE _URGENCY). As an example, the fourth MRM mode is applicable to a highly urgent abnormal situation, such as a brake failure or a vehicle completely out-of-control situations. Since the goal of emergency stop is to quickly eliminate potential risks, it causes the highest degree of traffic congestion, and has almost no restrictions about the stopping area. The autonomous vehicle 101 has the lowest requirement on the system remaining capability in this mode, only needs to be able to trigger braking and stop moving, and it is a measure with the lowest priority but the highest safety.

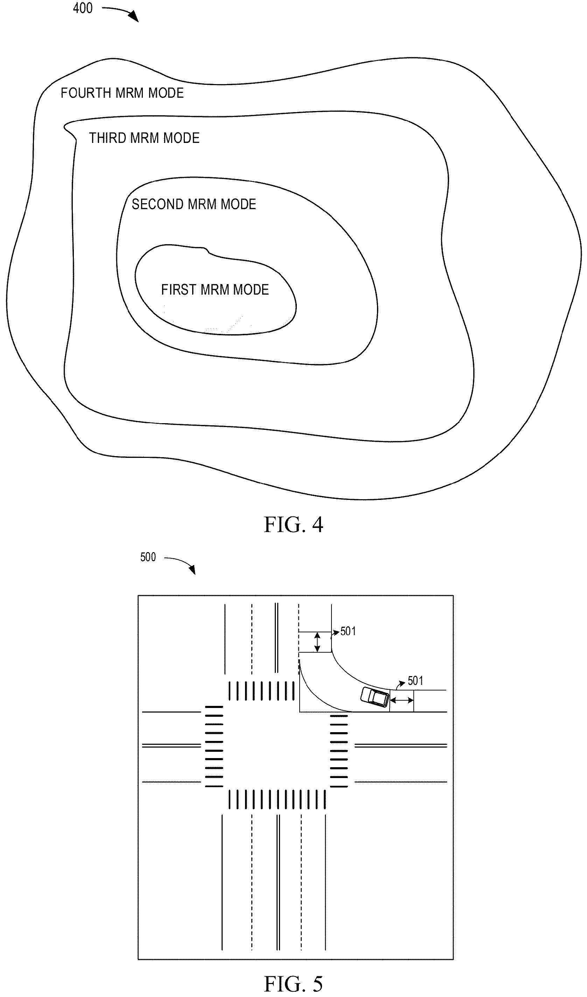

FIG. 4 illustrates a comparison diagram of parking ranges 400 of four MRM modes according to some embodiments of the present disclosure. With reference to the foregoing content, the range of the parking area gradually expands from a first parking area corresponding to the first MRM mode (the range of a fourth parking area corresponding to the fourth MRM mode is relatively the largest), the limitation gradually decreases, and different adaptations to the severity of the anomaly are reflected.

For the first MRM mode, the parking area may be represented as ZONE_HARBOR, allowing only the vehicle to park at a specific harbor area or eligible area such as a harbor area, a shoulder area. The shoulder area may include an area that satisfies the following conditions at the same time: between a road boundary line and a curb with a certain height (the vehicle cannot pass), a shoulder width sufficient to accommodate a vehicle body, and a non-no-parking area (e.g., without a no-parking sign).

For the second MRM mode, the parking area may be represented as ZONE_PULLRIGHT, and its range is relatively expanded compared to ZONE_HARBOR, allowing the vehicle to park on the right in an emergency lane or diversion area. As an example, the area allowed to park may include an emergency lane on the right side of the road, a diversion area (e.g., a diversion area at an exit of a highway). ZONE _INLANE may define a no-parking area (e.g., a main lane). If the emergency lane is occupied, the electronic device 150 may temporarily select a secondary right lane as the parking target point.

For the third MRM mode, the parking area may be represented as ZONE_INLANE, the parking range is further expanded, and the vehicle is allowed to slowly stop in the current lane. As an example, ZONE _INLANE may include any location within the current lane other than the no-parking area. The no-parking area may include at least one of the following: within an intersection, a yellow grid line area, a right-most motor vehicle lane in front of an entrance and exit, an intersection and a 30 meter (adjustable value) range before and after the intersection, an exclusive right turn lane and a 10 meter (adjustable values) range before and after it.

For the fourth MRM mode, the parking area may be represented as ZONE _URGENCY, the range of which is the widest, and there is almost no restriction on the stopping location. As an example, ZONE _URGENCY may include a passable area including an intersection, a yellow grid line area, a main lane, and the like. In certain emergency scenarios (such as collision detection), the parking process may require additional constraints, such as deceleration not exceeding a certain value, but the parking location range remains unaffected.

At block 202, the electronic device 150 obtains policy information corresponding to the target mode of the MRM, and the policy information at least indicates a maximum impact degree on a traffic environment allowed by the target mode.

The policy information at least includes a maximum impact degree on the traffic environment allowed by the target mode, that is, an interference tolerance of the autonomous vehicle to surrounding traffic flow in this mode is clarified. The policy information corresponding to different MRM target modes has different emphasis, for example, corresponding to the first MRM mode, the policy information may indicate that the autonomous vehicle 101 is only allowed to park in a specified harbor area, and the maximum impact degree is close to zero. Corresponding to the fourth MRM mode, the policy information may allow the autonomous vehicle 101 to stop at the highest deceleration in any passable area, and the maximum impact degree is high. By obtaining the policy information matched with the target mode, the system can formulate a safer and more efficient anomaly processing path for the autonomous vehicle, while reducing adverse impact on the traffic environment.

At block 203, the electronic device 150 controls a parking process of the autonomous vehicle 101 based on a current traffic environment of the autonomous vehicle 101 and the policy information.

The electronic device 150 may control a parking process of the autonomous vehicle 101 based on environmental perception data and a constraint condition of the target mode. The current traffic environment may include a type of lane in which the autonomous vehicle 101 is located (e.g., a main lane, a dedicated lane, or an emergency lane), flow and speed of surrounding vehicles, road signs (e.g., no-parking signs), and availability of shoulder or roadside areas, etc. In combination with the obtained policy information (for example, a constraint of a parking location, the tolerance on the traffic impact, and the parking time limit), the electronic device 150 may dynamically adjust the parking path and the target location. As an example, for the first MRM mode, the electronic device 150 may preferentially search for a nearest harbor area for parking. For the second MRM mode, the electronic device 150 may select a right emergency lane or hard shoulder for parking. For the third MRM mode, the electronic device 150 may stop slowly within the current lane while minimizing the traffic impact. For the third MRM mode, the electronic device 150 will directly stop at any allowed area at the maximum deceleration in the shortest time. By combining the traffic environment and policy information in real time, the autonomous vehicle 101 can ensure entering the minimum risk condition MRC quickly under abnormal conditions while minimizing interference to traffic flow. In the parking process, the electronic device 150 controls the autonomous vehicle 101 to turn on a corresponding turn signal, and in addition to the lane changing/parking process, hazard lights needs to be turned on at all other moments (including after parking).

Through the above process, the electronic device 150 may dynamically determine the target mode of the minimal risk manoeuvre MRM, obtain the policy information corresponding to the target mode, and control the parking process in combination with the current traffic environment, thereby realizing the flexibility and high efficiency of autonomous vehicle abnormal handling. According to different anomaly types and the remaining driving capability of the vehicle, an appropriate MRM mode is selected, combining the parking area, the time limit and the traffic impact constraint in the policy information, the parking path can be dynamically optimized, and the target location can be adjusted in real time, enabling the vehicle to quickly and safely enter the minimum risk condition MRC. According to the method, the adverse impact on the traffic environment is effectively reduced, meanwhile, the multi-scenario requirement from minor anomalies to emergency faults is met through hierarchical design, and the safety and intelligence of the autonomous vehicle are remarkably improved.

In the foregoing example, the policy information indicates a maximum impact degree on the traffic environment allowed by the target mode. In addition, the policy information may also indicate a maximum parking duration of the autonomous vehicle 101. In this case, the electronic device 150 adjusts the target mode of the MRM in response to the autonomous vehicle failing to complete parking within the maximum parking duration.

When the autonomous vehicle 101 fails to complete the parking within the maximum parking duration, the electronic device 150 may automatically adjust the MRM target mode according to the policy information to ensure that the vehicle can enter the minimum risk condition (MRC) as soon as possible.

For example, the electronic device 150 will adjust the target mode to the second MRM mode when the autonomous vehicle 101 fails to complete parking in the first MRM mode after a specific mileage (e.g., tentatively 2 km) or a specific time (e.g., tentatively 4 minutes), indicating the autonomous vehicle 101 to pull over. For another example, if the autonomous vehicle 101 has failed to complete parking within a specific time (e.g., tentatively 2 minutes) in the second MRM mode, a remote operation (RA) is triggered, and a remote control system determines whether to continue to try the second MRM mode or adjust to the third or fourth MRM modes. If the autonomous vehicle 101 has the adjustment condition, the autonomous vehicle 101 is indicated to enter the current lane for a slow stop or emergency stop state. In this process, the autonomous vehicle 101 continues the parking operation of the current target mode while requesting a remote response or waiting for a decision. By dynamically adjusting the target mode, this mechanism provides a flexible adjustment policy, and ensures that the autonomous vehicle 101 can complete parking in a safe and efficient manner all the time under abnormal circumstances.

In some embodiments, the policy information may further indicate a system capability constraint corresponding to the target mode. In this case, the electronic device 150 adjusts the target mode of the MRM in response to detecting that a system capability of the autonomous vehicle 101 fails to satisfy the system capability constraint.

The policy information may indicate a system capability constraint corresponding to the target mode, for example, a minimum braking capability, a steering capability, or a positioning navigation precision required by the autonomous vehicle 101 to perform the current target mode. When the electronic device 150 detects that the actual system capability of the autonomous vehicle 101 is below the system capability constraint, the target mode of the current minimal risk manoeuvre (MRM) will be adjusted. For example, when the autonomous vehicle 101 is in the first MRM mode, but the system capability is insufficient to accurately navigate to the harbor area, the electronic device 150 may dynamically downgrade the target mode to the second MRM mode, allowing the autonomous vehicle 101 to complete the parking in the roadside area. Similarly, if the autonomous vehicle 101 cannot complete the parking within a predetermined distance due to partial failure of the braking system in the second MRM mode, the target mode may be adjusted to be the third or fourth MRM mode, so that the autonomous vehicle 101 can stop slowly in the current lane or make an emergency stop. With such a system capability constraint adjustment mechanism, the electronic device 150 can adapt to changes or sudden anomalies in hardware performance of the autonomous vehicle 101, ensuring that the minimum risk condition (MRC) can still be safely entered when the capability of the autonomous vehicle 101 are limited.

In some embodiments, the electronic device 150 determines a parking location constraint corresponding to the target mode of the MRM based on the policy information. A target parking spot is determined based on the parking location constraint, where the impact degree on the current traffic environment of the parking at the target parking spot is less than the maximum impact degree. The autonomous vehicle is triggered to park at the target parking spot.

For the first MRM mode, the electronic device 150 controls the autonomous vehicle 101 to search for a defined harbor area for parking and shift to P (Park) gear. The harbor area usually has a minimum environmental impact, so the autonomous vehicle 101 needs to have high navigation accuracy to accurately drive into the target parking spot. When the autonomous vehicle 101 completes parking in the harbor area within a specific mileage (e.g., 2 km) or time duration (for example, 4 minutes), and the vehicle body pose meets the parking condition, it is regarded as a successful parking.

For the second MRM mode, the electronic device 150 controls the autonomous vehicle 101 to select a right hard shoulder or the emergency lane to park according to the parking location constraint, and shift to P gear. If the right lane cannot park because it is occupied by temporary parking, the electronic device 150 dynamically adjusts the parking location, for example, selects the secondary right lane as a temporary target spot. If the right lane becomes available before the autonomous vehicle 101 has completed parking, the electronic device 150 may update the parking location constraint in real time to control the autonomous vehicle 101 to park back to the right lane. When a center point of the vehicle is located in the allowed parking location, and the angle between the vehicle body and the lane line is less than a predetermined value (for example, 30 °), it is regarded as a successful parking.

For the third MRM mode, the electronic device 150 detects, based on the parking location constraint, whether the stopping within the current lane could be completed within a specified distance (for example, 25 meters) without exceeding a predetermined deceleration (for example, -3m/s²). If it cannot be completed, the electronic device 150 plans to drive to the next parking area, and completes the parking within a predetermined distance after entering the area. If a sudden environmental factor (for example, sudden appearance of a pedestrian) needs a greater deceleration (for example, -6m/s²;), the electronic device 150 adjusts the parking location constraint and completes the parking in time. To handle an extreme case, for the third MRM mode, the autonomous vehicle 101 fails to reduce its speed to 0 within 20 seconds, and is not taken over by a safe mode (Fallback), and this will be recorded as a third MRM mode failure. For such cases, if the current area is the non-parking area, the electronic device 150 immediately triggers the fourth MRM mode and decelerates to the stopping state at the predetermined deceleration (for example, -3m/s²). If the current area is the no-parking area, the autonomous vehicle 101 needs to preferentially leave the no-parking area and then trigger the fourth MRM mode to complete the parking operation. Direct adjustment to the fourth MRM mode is not allowed within the no-parking area. In addition, the electronic device 150 also limits a speed behavior of the autonomous vehicle 101 in the third MRM mode, e.g., when the autonomous vehicle 101 decelerates below a predetermined vehicle speed (e.g., 30kph), it is not allowed to accelerate above the predetermined vehicle speed again, unless the third MRM mode is explicitly deactivated. This mechanism ensures that in complex traffic scenarios, the third MRM mode can dynamically adapt to the current environment, to implement fast and safe parking operations.

When the third MRM mode is triggered during lane changing, the current lane and the target lane have the same priority, and the electronic device 150 may control the autonomous vehicle 101 to select a more suitable lane to complete parking according to the actual road conditions. When the autonomous vehicle 101 stops firmly within the parking area and shifts into P gear, it is regarded as a successful parking.

For the fourth MRM mode, the electronic device 150 controls the autonomous vehicle 101 to stop along a planned trajectory at a maximum allowed deceleration (e.g., system maximum braking capability) and shift into P gear. In a specific scenario (e.g., a collision detection requires a lower deceleration response), the electronic device 150 may adjust a parking form, for example, stop within 10 meters but the deceleration does not exceed -6m/². If the fourth MRM mode is triggered when reversing, the electronic device 150 may apply deceleration in the reversing direction until stopping. Whether moving forward or reversing, as long as the vehicle stops firmly and shifts to P gear, it is regarded as successful. For extreme scenario security, if the autonomous vehicle 101 fails to complete parking within 10 seconds after triggering the fourth MRM mode, and remains in the fourth MRM mode (not taken over by the safe mode (Fallback)), this will be recorded as a failure. At this time, the electronic device 150 may immediately trigger the safe mode takeover, forcibly decelerate the autonomous vehicle 101 to a stationary state, ensuring safe entry into the minimum risk condition. The safe mode takeover may include directly triggering an emergency brake or adjusting a parking path to adapt to a sudden environmental risk. This mechanism not only ensures parking efficiency of the fourth MRM mode in the normal condition, but also effectively responds to the extreme scenarios, and improves safety and robustness.

For the four MRM modes, the first MRM mode corresponds to a first maximum parking duration, the second MRM mode corresponds to a second maximum parking duration, the third MRM mode corresponds to a third maximum parking duration, the fourth MRM mode corresponds to a fourth maximum parking duration, the first maximum parking duration is greater than the second maximum parking duration, the second maximum parking duration is greater than the third maximum parking duration, and the third maximum parking duration is greater than the fourth maximum parking duration.

The first MRM mode corresponds to the first maximum parking duration, which is the longest duration, and allows the autonomous vehicle 101 to park for a long time within the ZONE _HARBOR area. Since the harbor area is usually designed as a dedicated parking space with very minor impact on the traffic environment, so the parking duration may be relatively relaxed, for example, for vehicle troubleshooting or waiting for rescue. Setting of the first maximum parking duration reflects the optimal balance of the mode on safety and traffic flow.

The second MRM mode corresponds to the second maximum parking duration, which is relatively shorter, and allows the vehicle to park for a medium period of time within the ZONE_PULLRIGHT (e.g., an emergency lane or a hard shoulder). Since the pull-over parking may have a certain impact on the traffic flow, the parking time needs to be moderately limited. For example, when rescue or remote control does not intervene in time, the parking duration may be set to 4 minutes according to an actual test situation, and exceeding this duration will trigger the target mode to be degraded or adjusted.

The third MRM mode corresponds to the third maximum parking duration, which is further shortened, and the third MRM mode is applicable to a scenario in which the vehicle is slowly stopped within the current lane. Due to the large impact on traffic congestion of stopping within the lane, the parking duration needs to be strictly limited. For example, the parking duration may be set to 2 minutes to ensure that the vehicle can complete the abnormal disposal as soon as possible, thereby reducing interference to subsequent vehicles.

The fourth MRM mode corresponds to the fourth maximum parking duration, which is the shortest, and the fourth MRM mode is applicable to an abnormal situation of high urgency. When the vehicle stops within ZONE _URGENCY (e.g., any allowed area), the parking operation needs to be completed as soon as possible and enters the minimum risk condition (MRC). The parking time is limited to only a very short period, such as within 10 seconds, to minimize the ongoing impact on the traffic environment.

For the autonomous vehicle 101, it may be a private car or a commercial vehicle. If the autonomous vehicle 101 is a commercial vehicle, and the autonomous vehicle is in a drop-off process to a destination, the method further comprises: determining, in response to the target mode is the first MRM mode or the second MRM mode, whether a distance to a parking location corresponding to the target mode is greater than a distance to the destination. In response to the distance to the parking location being greater than the distance to the destination, the autonomous vehicle 101 is controlled to start a parking process corresponding to the target mode after completing the drop-off process.

When the autonomous vehicle 101 is a commercial vehicle and is in the drop-off process, the electronic device 150 determines whether a distance to the parking location is greater than a distance to an end point of an order according to the parking location constraint corresponding to the target mode. If the distance to the parking location is greater than the distance to the destination, the autonomous vehicle 101 should preferentially complete the drop-off process, and start the parking operation corresponding to the target mode after the passenger gets off.

For example, in the first MRM mode, the parking location of the harbor area may be located at a road section after the end point of the order. At this time, the autonomous vehicle 101 may continue to move forward to the end point of the order, and after the passenger gets off, re-plan a parking path according to the requirement of the first MRM mode and park into the harbor area. Similarly, in the second MRM mode, the parking location of the right lane may likewise be located after the end point of the order. At this time, the autonomous vehicle 101 preferentially completes the task of dropping off the passenger, and then returns to the area conforming to the parking location constraint of the second MRM mode to complete the pull-over operation.

In addition, in order to avoid interference during the state timing of the drop-off process, a process of the passenger getting off is not included in the parking timing of the first MRM mode or the second MRM mode. This processing manner ensures that the electronic device 150 can perform subsequent operations according to the parking requirement of the target mode while meeting the passenger demand.

In some embodiments, the current traffic environment indicates whether a current lane of the autonomous vehicle is a dedicated driving lane, and the dedicated driving lane includes a right-turn dedicated lane.

FIG. 5 illustrates a schematic diagram of a right turn dedicated lane 500 according to some embodiments of the present disclosure. The current traffic environment may include identification information of a dedicated driving lane, to indicate whether a lane in which the autonomous vehicle 101 is currently located belongs to a dedicated driving lane. The dedicated driving lane typically includes a right turn dedicated lane, a right-most motor vehicle lane in front of an entrance and exit, and other lane-types with specific limits. When controlling the autonomous vehicle 101 to park, the electronic device 150 needs to dynamically adjust the target parking location and the path planning according to the special requirements of the dedicated driving lane. For an exclusive right turn dedicated lane (with a hard isolation area on both sides of the lane) and a specified distance range 501 (for example, 10 meters) of the entrance and exit of the lane, the purpose of the design is to ensure smooth right turn traffic flow, and is therefore defined as a no-parking area of ZONE _URGENCY. If the autonomous vehicle triggers the MRM mode in this area, the autonomous vehicle should preferentially leave the right turn dedicated lane and then select an appropriate parking spot.

The right-most motor vehicle lane located in front of the main entrance and exit may cause great interference to the incoming and exiting traffic flows, and thus is generally regarded as a no-parking area that cannot be parked. When the autonomous vehicle 101 executes the MRM mode, the autonomous vehicle 101 should avoid this area and preferentially select a location further away from the entrance and exit to complete the parking operation.

By combining the limiting conditions of these dedicated driving lanes, the autonomous vehicle 101 can dynamically adjust the parking path, ensure that the parking behavior meets the policy information constraint of the target mode, and avoid unnecessary interference to the current traffic environment.

In some embodiments, there is a significant difference in selecting parking area and requirements for traffic congestion degree between the parking process of the target mode based on the minimal risk manoeuvre MRM and the passenger pick-up and drop-off parking. The passenger pick-up and drop-off parking is temporary parking, the parking duration is generally be well estimated, the congestion degree of traffic is relatively mild and controllable. Therefore the range of parking locations to choose from is relatively large, for example, bus stations, entrance and exit areas and the like can all be used as pick-up and drop-off points. However, the parking process of the target mode of based on the minimal risk manoeuvre MRM is a parking after the vehicle has an anomaly, since information about whether the anomaly is resolved and when the rescue will arrive is difficult to predict, in order to ensure safety as much as possible and reduce the degree of traffic congestion, the parking process of the target mode of based on the minimal risk manoeuvre MRM is more strict in area selection, for example, the right-most lane adjacent to the entrance and exit, a bus station and other areas are no-parking areas. Through different adaptations of two parking scenarios, this design ensures that it can meet the pick-up and drop-off needs of commercial vehicles, and meanwhile, it can provide a safer and more standardized parking solution in an anomaly situation.

### Example Apparatus and Device

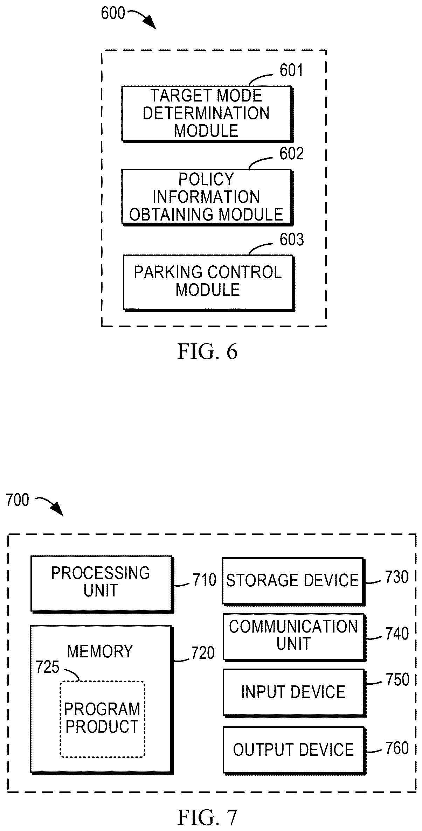

FIG. 6 illustrates a schematic structural block diagram of an apparatus 600 for an autonomous vehicle according to some embodiments of the present disclosure. The apparatus 600 may be implemented as a remote device 120 or included in the remote device 120. Each module/component in the apparatus 600 may be implemented by hardware, software, firmware, or any combination thereof.

As shown, the apparatus 600 includes a target mode determination module 601 configured to determine, in response to detecting an anomaly associated with the autonomous vehicle, a target mode of a minimal risk manoeuvre MRM to enter a minimum risk condition MRC. A policy information obtaining module 602 is configured to obtain policy information corresponding to the target mode of the MRM, and the policy information at least indicates a maximum impact degree on a traffic environment allowed by the target mode. A parking control module 603 is configured to control a parking process of the autonomous vehicle based on a current traffic environment of the autonomous vehicle and the policy information.

In some embodiments, the policy information further indicates a maximum parking duration of the autonomous vehicle, and the apparatus 600 further includes a target mode adjustment mode. The target mode adjustment module may be configured to adjust the target mode of the MRM in response to the autonomous vehicle failing to complete parking within the maximum parking duration.

In some embodiments, the policy information further indicates a system capability constraint corresponding to the target mode, and the target mode adjustment module may be configured to adjust the target mode of the MRM in response to detecting that a system capability of the autonomous vehicle fails to satisfy the system capability constraint.

In some embodiments, the parking control module 603 may be specifically configured to: determine, based on the policy information, a parking location constraint corresponding to the target mode of the MRM. A target parking spot is determined based on the parking location constraint, where the impact degree on the current traffic environment of the parking at the target parking spot is less than the maximum impact degree. The autonomous vehicle is triggered to park at the target parking spot.

In some embodiments, the target mode determined by the target mode determination module 601 is determined from following predetermined modes: a first MRM mode, indicating to park in a harbor area, the maximum impact degree being a first degree; a second MRM mode, indicating to pull over, the maximum impact degree being a second degree, and the second degree being higher than the first degree; a third MRM mode, indicating to stop within a current lane, the maximum impact degree being a third degree, and the third degree being higher than the second degree; and a fourth MRM mode, indicating an emergency stop, the maximum impact degree being a fourth degree, and the fourth degree being higher than the third degree.

In some embodiments, the first MRM mode corresponds to a first maximum parking duration, the second MRM mode corresponds to a second maximum parking duration, the third MRM mode corresponds to a third maximum parking duration, and the fourth MRM mode corresponds to a fourth maximum parking duration, and the first maximum parking duration is greater than the second maximum parking duration, the second maximum parking duration is greater than the third maximum parking duration, and the third maximum parking duration is greater than the fourth maximum parking duration.

In some embodiments, the autonomous vehicle is in a drop-off process to a destination, and the parking control module 603 may be further configured to: in response to the target mode being the first MRM mode or the second MRM mode, determine whether a distance to a parking location corresponding to the target mode is greater than a distance to the destination. In response to the distance to the parking location being greater than the distance to the destination, the autonomous vehicle is controlled to start a parking process corresponding to the target mode after completing the drop-off process.

In some embodiments, the current traffic environment indicates whether a current lane of the autonomous vehicle is a dedicated driving lane, and the dedicated driving lane includes a right turn dedicated lane.

FIG. 7 illustrates a block diagram of a computing device 700 capable of implementing one or more embodiments of the present disclosure. It should be understood that the computing device 700 shown in FIG. 7 is merely an example and should not constitute any limitation on the functionality and scope of the embodiments described herein. The computing device 700 shown in FIG. 7 may be configured to implement the remote device 120 or the electronic device 150 of FIG. 1.

As shown in FIG. 7, the computing device 700 is in a form of a general-purpose computing device. Components of the computing device 700 may include, but are not limited to, one or more processors or processing units 710, a memory 720, a storage device 730, one or more communication units 740, one or more input devices 750, and one or more output devices 760. The processing unit 710 may be a physical or virtual processor and capable of performing various processes according to programs stored in the memory 720. In a multi-processor system, a plurality of processing units execute computer-executable instructions in parallel to improve parallel processing capabilities of the computing device 700.

The computing device 700 typically includes a plurality of computer storage media. Such media may be any available media that is accessible to the computing device 700, including, but not limited to, volatile and non-volatile media, removable and non-removable media. The memory 720 may be volatile memory (e.g., a register, a cache, a random access memory (RAM)), a non-volatile memory (e.g., a read-only memory (ROM), an electrically erasable programmable read-only memory (EEPROM), a flash memory), or some combination thereof. The storage device 730 may be a removable or non-removable medium, and may include a machine-readable medium, such as a flash drive, a magnetic disk, or any other medium, which may be capable of storing information and/or data (e.g., training data for training) and may be accessed within the computing device 700.

The computing device 700 may further include additional removable/non-removable, volatile/non-volatile storage media. Although not shown in FIG. 7, a disk drive for reading from a removable, non-volatile magnetic disk (e.g., a "floppy disk") or writing to a removable, non-volatile magnetic disk, and an optical disk drive for reading from a removable, non-volatile optical disk or writing to a removable, non-volatile optical disk may be provided. In these cases, each drive may be connected to a bus (not shown) by one or more data media interfaces. The memory 720 may include a computer program product 725 having one or more program modules configured to perform various methods or actions of various embodiments of the present disclosure.

The communications unit 740 implements communications with other computing devices over a communications medium. Additionally, the functionality of components of the computing device 700 may be implemented by a single computing cluster or a plurality of computing machines , which may communicate over a communication connection. Thus, the computing device 700 may operate in a networked environment using logical connections with one or more other servers, network personal computers (PCs), or another network node.

The input device 750 may be one or more input devices, such as a mouse, a keyboard, a trackball, or the like. The output device 760 may be one or more output devices, such as a display, a speaker, a printer, or the like. The computing device 700 may also communicate with one or more external devices (not shown) through the communication unit 740 as needed, the external devices such as storage devices, display devices, etc. , communicate with one or more devices that enable a user to interact with the computing device 700, or communicate with any device (e.g., a network card, a modem, etc. ) that enables the computing device 700 to communicate with one or more other computing devices. Such communication may be performed via an input/output (I/O) interface (not shown).

According to example implementations of the present disclosure, a computer-readable storage medium is provided, the computer-readable storage medium has computer-executable instructions stored thereon, where the computer-executable instructions are executed by a processor to implement the method described above. According to example implementations of the present disclosure, a computer program product is further provided, the computer program product is tangibly stored on a non-transitory computer-readable medium and includes computer-executable instructions, and the computer-executable instructions are executed by a processor to implement the method described above.

Various aspects of the present disclosure are described herein with reference to flowcharts and/or block diagrams of methods, apparatuses, devices, and computer program products implemented in accordance with the present disclosure. It should be understood that each block of the flowcharts and/or block diagrams, and combinations of blocks in the flowcharts and/or block diagrams, may be implemented by computer readable program instructions.

These computer-readable program instructions may be provided to a processing unit of a general purpose computer, a special purpose computer, or other programmable data processing apparatus to produce a machine, such that the instructions, when executed by the processing unit of a computer or other programmable data processing apparatus, produce an apparatus for implementing the functions/acts specified in one or more blocks of the flowcharts and/or block diagrams. These computer-readable program instructions may also be stored in a computer-readable storage medium, and these instructions cause the computer, programmable data processing apparatus, and/or other devices to function in a specific manner, such that the computer-readable medium storing the instructions includes an article of manufacture including instructions to implement various aspects of the functions/acts specified in one or more blocks of the flowcharts and/or block diagrams.

The computer-readable program instructions may be loaded onto a computer, other programmable data processing apparatus, or other devices, such that a series of operational steps are performed on the computer, other programmable data processing apparatus, or other devices to produce a computer-implemented process such that the instructions executed on the computer, other programmable data processing apparatus, or other devices implement the functions/acts specified in one or more blocks of the flowcharts and/or block diagrams.

The flowcharts and block diagrams in the drawings illustrate an architecture, functionality, and operation of possible implementations of systems, methods, and computer program products according to a plurality of implementations of the present disclosure. In this regard, each block in the flowcharts or block diagrams may represent a module, program segment, or part of an instruction that includes one or more executable instructions for implementing the specified logical functions. In some alternative implementations, the functions noted in the blocks may also occur in an order different from that is marked in the drawings. For example, two consecutive blocks may actually be performed substantially in parallel, or they may sometimes be performed in a reverse order, depending on the functionality involved. It is also noted that each block in the block diagrams and/or flowcharts, as well as combinations of blocks in the block diagrams and/or flowcharts, may be implemented with a dedicated hardware-based system that performs specified functions or actions, or may be implemented in a combination of dedicated hardware and computer instructions.

Various implementations of the present disclosure have been described above, and the above description is for example, not exhaustive, and are not limited to the implementations disclosed. Many modifications and variations will be apparent to those of ordinary skill in the art without departing from the scope of the various described implementations. The selection of the terminology used herein is intended to best explain the principles of the implementations, practical applications, or improvements to techniques in the marketplace, or to enable other ordinary skilled persons in the art to understand the various implementations disclosed herein.

## Claims

1. A method (200) for an autonomous vehicle comprising:
determining (201), in response to detecting an anomaly associated with the autonomous vehicle, a target mode of a minimal risk manoeuvre MRM to enter a minimum risk condition MRC;
obtaining (202) policy information corresponding to the target mode of the MRM, the policy information at least indicating a maximum impact degree on a traffic environment allowed by the target mode; and
controlling (203) a parking process of the autonomous vehicle based on a current traffic environment of the autonomous vehicle and the policy information.

2. The method of claim 1, wherein the policy information further indicates a maximum parking duration of the autonomous vehicle, and the method further comprises:
adjusting the target mode of the MRM in response to the autonomous vehicle failing to complete parking within the maximum parking duration.

3. The method of claim 1, wherein the policy information further indicates a system capability constraint corresponding to the target mode, and the method further comprises:
adjusting the target mode of the MRM in response to detecting that a system capability of the autonomous vehicle fails to satisfy the system capability constraint.

4. The method of claim 1, wherein controlling the parking process of the autonomous vehicle based on the current traffic environment of the autonomous vehicle and the policy information comprises:
determining, based on the policy information, a parking location constraint corresponding to the target mode of the MRM;
determining a target parking spot based on the parking location constraint, wherein the impact degree on the current traffic environment of the parking at the target parking spot is less than the maximum impact degree; and
triggering the autonomous vehicle to park at the target parking spot.

5. The method of claim 1, wherein the target mode is determined from following predetermined modes:
a first MRM mode, indicating to park in a harbor area, the maximum impact degree being a first degree;
a second MRM mode, indicating to pull over, the maximum impact degree being a second degree, and the second degree being higher than the first degree;
a third MRM mode, indicating to stop within a current lane, the maximum impact degree being a third degree, and the third degree being higher than the second degree;
a fourth MRM mode, indicating an emergency stop, the maximum impact degree being a fourth degree, and the fourth degree being higher than the third degree.

6. The method of claim 5, wherein the first MRM mode corresponds to a first maximum parking duration, the second MRM mode corresponds to a second maximum parking duration, the third MRM mode corresponds to a third maximum parking duration, and the fourth MRM mode corresponds to a fourth maximum parking duration, and
the first maximum parking duration is greater than the second maximum parking duration, the second maximum parking duration is greater than the third maximum parking duration, and the third maximum parking duration is greater than the fourth maximum parking duration.

7. The method of claim 5, wherein the autonomous vehicle is in a drop-off process to a destination, the method further comprising:
determining, in response to the target mode being the first MRM mode or the second MRM mode, whether a distance to a parking location corresponding to the target mode is greater than a distance to the destination; and
controlling, in response to the distance to the parking location being greater than the distance to the destination, the autonomous vehicle to start a parking process corresponding to the target mode after completing the drop-off process.

8. The method of claim 1, wherein the current traffic environment indicates whether a current lane of the autonomous vehicle is a dedicated driving lane, the dedicated driving lane including a right turn dedicated lane.

9. An apparatus (600) for an autonomous vehicle comprising:
a target mode determination module (601) configured to determine, in response to detecting an anomaly associated with the autonomous vehicle, a target mode of a minimal risk manoeuvre MRM to enter a minimum risk condition MRC;
a policy information obtaining module (602) configured to obtain policy information corresponding to the target mode of the MRM, the policy information at least indicating a maximum impact degree on a traffic environment allowed by the target mode.
a parking control module (603) configured to control a parking process of the autonomous vehicle based on a current traffic environment of the autonomous vehicle and the policy information.

10. An electronic device (700) comprises:
at least one processing unit (710); and
at least one memory (720), the at least one memory being coupled to the at least one processing unit (710) and storing instructions for execution by the at least one processing unit (710), the instructions, when executed by the at least one processing unit (710), causing the electronic device (700) to perform the method of any of claims 1 to 8.

11. A computer-readable storage medium having a computer program stored thereon, the computer program executable by a processor to implement the method of any of claims 1 to 8.

12. A computer program product comprising computer-executable instructions, wherein the computer-executable instructions, when executed by a processor, implement the method of any of claims 1 to 8.
